# EUROPÄISCHE PATENTSCHRIFT

(11) **EP 3 236 222 B1**
(45) Veröffentlichungstag und Bekanntmachung des Hinweises auf die Patenterteilung: **24.06.2020**
(21) Anmeldenummer: 16166552.6
(22) Anmeldetag: 22.04.2016
(51) Int. Cl.: G01L 9/00, G01L 19/00, G01K 13/02, G01K 1/14

(54) **DRUCK- UND TEMPERATURSENSOR**
PRESSURE AND TEMPERATURE SENSOR
SONDE DE TEMPERATURE ET DE PRESSION

(43) Veröffentlichungstag der Anmeldung: 25.10.2017
(73) Patentinhaber: Kistler Holding AG, 8408 Winterthur (CH)
(72) Erfinder: Dietze, Wolfgang, 8408 Winterthur (CH); Leutwyler, Roger, 8636 Wald (CH); Bollhalder, Stefan, 8404 Winterthur (CH); Besmer, Jason, 8400 Winterthur (CH)

(56) Entgegenhaltungen:
- DE-A1-102005 060 651
- US-A- 5 948 989

## Beschreibung

### Technisches Gebiet

Die Erfindung betrifft einen Druck- und Temperatursensor nach dem Oberbegriff des unabhängigen Anspruchs.

### Stand der Technik

Sensor zur Erfassung von Druck und Temperatur eines Mediums sind bekannt und werden vielfältig eingesetzt. Beim Medium handelt es sich um Gase, Flüssigkeiten, usw. So wird mit einem solchen Sensor bei der Druckindizierung von Verbrennungsmotoren ein in einer Druckkammer herrschender Zylinderdruck in Abhängigkeit einer Kurbelwellenstellung oder einer Zeit erfasst. Verbrennungsmotoren umfassen Viertaktmotoren und Zweitaktmotoren wie Ottomotoren, Dieselmotoren, Wankelmotoren, usw. Und im Automobilsport wird mit dem Sensor während eines Rennens eine Überwachung eines Druckes eines Fluides eines Rennwagens wie einer Bremsflüssigkeit, eines Getriebeöls, einer Hydrauliköls, eines Kreislaufs eines Kühlmittels, usw. durchgeführt. Dabei werden schnelle Druckverläufe erfasst, die normalerweise im Bereich von 5 bis 30 bar sind, jedoch mit kurzfristigen Druckspitzen von 50 bar und höher. Im Einsatz ist der Sensor permanent starken Vibrationen und hohen Temperaturen von bis zu 200 °C ausgesetzt. Der Sensor lässt sich aber auch bei der Drucküberwachung in Strahltriebwerken, Gasturbinen, Dampfturbinen, Dampfmaschinen, usw. einsetzen.

Die Schrift WO2013/143748A1 offenbart einen solchen Sensor zur Erfassung von Druck und Temperatur eines Mediums. Der Sensor umfasst ein Gehäuseunterteil und eine Trennmembran. Die Trennmembran ist mechanisch mit dem Gehäuseunterteil verbunden. Der Sensor umfasst einen Druckanschluss. Der Druckanschluss weist ein Mediumende und einen Zuführkanal auf. Am Mediumende steht der Druckanschluss im direkten Kontakt mit dem Medium. Der Zuführkanal erstreckt sich vom Mediumende zur Trennmembran. Die Trennmembran verschliesst den Zuführkanal. Medium gelangt somit durch den Zuführkanal vom Mediumende zur Trennmembran. Der Sensor umfasst weiterhin ein Drucksensormodul zur Erfassung des Druckes. Das Drucksensormodul ist mechanisch mit dem Gehäuseunterteil verbunden. Das Drucksensormodul ist auf einer vom Zuführkanal abgewandten Seite der Trennmembran angeordnet. Die Trennmembran überträgt den Druck des Mediums auf das Drucksensormodul. Der Sensor umfasst auch einen Temperaturmessfühler zur Erfassung der Temperatur des Mediums. Der Temperaturmessfühler ist in einer Hülse angeordnet. Ein erstes Ende der Hülse ist geschlossen, ein zweites Ende der Hülse ist offen. Im Bereich des Mediumendes steht das erste Ende der Hülse im direkten Kontakt mit dem Medium. Das zweite Ende der Hülse ist mechanisch mit dem Gehäuseunterteil verbunden. Die Hülse ist auch mit der Trennmembran verbunden. Die Hülse ragt durch einen Bohrung der Trennmembran in den Zuführkanal und am Mediumende aus dem Zuführkanal in das Medium und überträgt die Temperatur des Mediums auf den Temperaturmessfühler.

Die Trennmembran trennt das Medium vom Drucksensormodul mediendicht und die Hülse trennt das Medium vom Temperaturmessfühler mediendicht. Durch diese mediendichte Trennung wird eine hohe Medienresistenz sowohl des Drucksensormoduls auch des Temperaturmessfühler gegenüber einem chemisch aggressiven Medium wie Abgas, Bremsflüssigkeit, Getriebeöl, Hydrauliköl, Kühlmittel, Kraftstoff, usw. geschaffen. Für eine möglichst gute Übertragung von Druck und Temperatur weisen die Trennmembran und die Hülse sehr geringe Wandstärken von kleiner 0.5 mm auf. Die Herstellung und Weiterverarbeitung von Bauteilen mit solch geringen Wandstärken ist aufwändig. Insbesondere ist die Herstellung der Bohrung in der Trennmembran aufwändig und die mechanischen Verbindungen des zweiten Endes der Hülse mit dem Gehäuseunterteil sowie die mechanische Verbindung der Hülse mit der Trennmembran sind aufwändig, was zu hohem Ausschuss und Kosten bei der Herstellung des Sensors führt.

DE101005060651A1 offenbart einen Druck- und Temperatursensor mit einem mediennahen Sensorkörper, welcher Sensorkörper eine Durchgangsbohrung zu einer Membran aufweist. Der Drucksensor ist auf einer vom Sensorkörper abgewandten Seite medienfern hinter der Membran angeordnet. Der Temperatursensor ist im Sensorkörper in einem weiteren Hohlraum angeordnet und über eine Abdeckung mediennah am Sensorkörper befestigt.

Auch US5948989A1 zeigt einen Druck- und Temperatursensor mit einem mediennahen Träger, welcher Träger Teile einer Druckzuleitung zu einem medienfern in einem Sensorgehäuse hinter dem Träger angeordneten Drucksensor aufweist. Ein Temperatursensor ist über einen Vorsprung mediennah am Träger befestigt.

Auch herrscht im Markt ein Bedürfnis nach Sensoren zur Erfassung von Druck und Temperatur mit möglichst kleinen äusseren Abmessungen und geringem Gewicht. Dies liegt nicht zuletzt daran, dass Verbrennungsmotoren und deren Peripherie von den äusseren Abmessungen immer kleiner und kompakter werden und daher nur wenig Platz zum Anbringen des Sensors vorhanden ist. Auch hat das Gewicht von Rennwagen einen grossen Einfluss auf deren Leistungsfähigkeit, weshalb möglichst leichte Sensoren verlangt werden.

Eine erste Aufgabe der vorliegenden Erfindung ist es, einen Druck- und Temperatursensor aufzuzeigen, der einfach und kostengünstig herzustellen ist. Eine weitere Aufgabe der Erfindung besteht darin, einen Druck- und Temperatursensor anzugeben, der kleine äussere Abmessungen aufweist und von geringem Gewicht ist.

### Darstellung der Erfindung

Zumindest eine der Aufgaben wird durch die Merkmale des unabhängigen Anspruchs gelöst.

Im Vergleich zur Schrift WO2013/143748A1 ist das zweite Ende der Hülse mit dem Temperaturmessfühler nicht mehr mit einem Gehäuseunterteil mechanisch verbunden. Die Hülse befindet sich auch nicht mehr im Zuführkanal eines Druckanschlusses und sie ragt auch nicht mehr durch eine Bohrung einer den Zuführkanal verschliessenden Trennmembran. Die Herstellung des erfindungsgemässen Druck- und Temperatursensors ist somit bedeutend weniger aufwändig. Vorzugsweise ist das zweite Ende der Hülse an einem Mediumende mit einem Stutzen des Prozessanschlusses stoffschlüssig verbunden. Der Stutzen ist ausgelegt, in das Medium zu ragen. Vorzugsweise erfolgt der Stoffschluss zwischen einem Rand des zweiten Endes der Hülse mit einem Steg des Stutzens. Der Stoffschluss am Mediumende ist relativ einfach zu bewerkstelligen, da das Mediumende für ein Fügewerkzeug gut zugänglich ist.

### Kurze Beschreibung der Zeichnungen

Im Folgenden wird die Erfindung beispielhaft unter Beizug der Figuren näher erklärt. Es zeigen
- Fig. 1: einen Schnitt durch eine Querschnittsebene eines Teils einer bevorzugten Ausführungsform des Druck-und Temperatursensors;
- Fig. 2: einen Schnitt durch die Querschnittsebene eines Teils der Ausführungsform des Druck- und Temperatursensors nach Fig. 1; und
- Fig. 3: eine perspektivische Ansicht eines Teils der Ausführungsform des Druck- und Temperatursensors nach Fig. 1 oder 2.

### Wege zur Ausführung der Erfindung

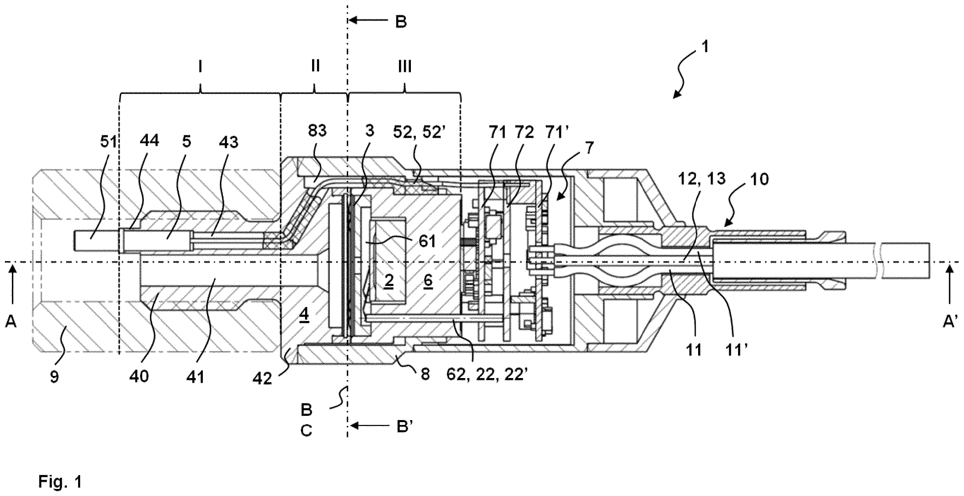

Fig. 1 bis 3 zeigen Teile einer bevorzugten Ausführungsform eines Druck- und Temperatursensor 1. Der Druck- und Temperatursensor 1 hat in axialer Richtung eine grössere Ausdehnung als in radialer Richtung. Der Druck- und Temperatursensor 1 ist in einem rechtwinkligen Koordinatensystem mit einer Abszisse AA', einer Ordinate BB' und einer Applikate CC' dargestellt. Die Abszisse AA' verläuft in axialer Richtung mittig durch den Druck- und Temperatursensor 1. Mit der Abszisse AA' wird eine Mitte des Druck- und Temperatursensors 1 definiert. Ordinate BB' und Applikate CC' verlaufen in radialer Richtung durch den Druck- und Temperatursensor 1. Ordinate BB' und Applikate CC' liegen in einer Querschnittsebene BC senkrecht zur Abszisse AA'. Ein Schnittpunkt von Abszisse AA', Ordinate BB' und Applikate CC' liegt in einen Mittelpunkt des Druck- und Temperatursensors 1.

Der Druck- und Temperatursensor 1 weist einen Druckanschluss 4 auf. Der Druckanschluss 4 wird auch als Prozessanschluss 4 bezeichnet. Der Prozessanschluss 4 ist zylinderförmig und besteht aus mechanisch und chemisch beständigem Material wie aus Reinmetallen, Nickellegierungen, Kobaltlegierungen, Eisenlegierungen, usw. Vorzugsweise ist der Prozessanschluss 4 einstückig. Bezüglich der Abszisse AA' weist der Prozessanschluss 4 ein dem Medium zugewandtes Mediumende und ein einer Trennmembran 3 zugewandtes Ende. Die Trennmembran 3 ist weitgehend im Mittelpunkt des Druck- und Temperatursensors 1 angeordnet.

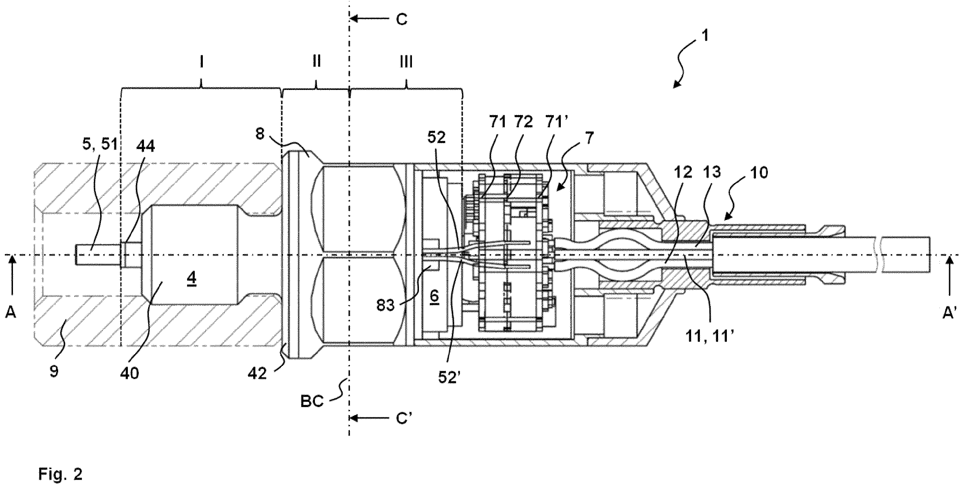

Der Prozessanschluss 4 ist am Mediumende als Stutzen 40 ausgebildet. Der Stutzen 40 ist ausgelegt, am Mediumende in das Medium zu ragen. Das Mediumende steht im Einsatz des Druck- und Temperatursensors 1 im direkten Kontakt mit dem Medium der Druckkammer. Beim Medium handelt es sich um Gase, Flüssigkeiten, usw. Der Stutzen 40 ist für eine mechanische Verbindung mit einer Wand 9 ausgelegt. Vorzugsweise ist die mechanische Verbindung ein Kraftschluss. Die Wand 9 kann die Wand einer Druckkammer oder eines Behälters für Bremsflüssigkeit, Getriebeöl, Hydrauliköl, Kühlmittel, usw. sein. Fig. 1 und 2 zeigen den Stutzen 40 im mit der Wand 9 mechanisch verbundenen Zustand. Der Stutzen 40 ist in einem Stutzenbereich I angeordnet. im Stutzenbereich I ist der Stutzen 40 bezüglich der Abszisse AA' radial innerhalb der Wand 9. Mit dem Stutzen 40 ragt der Prozessanschluss 4 in die Wand 9. Der Stutzen 40 weist in einer Aussenfläche ein Anschlussmittel für eine kraftschlüssige Verbindung mit der Wand 9 auf. Das Anschlussmittel ist ein Aussengewinde im Stutzen 40, das in ein entsprechendes Innengewinde in der Wand 9 greift. Der Stutzen 40 ist in der Querschnittsebene BC weitgehend kreisförmig mit einem maximalen Durchmesser von rund 6.0 mm.

Der Prozessanschluss 4 ist am der Trennmembran 3 zugewandten Ende als Flansch 42 ausgebildet. Der Flansch 42 ist für eine mechanische Auflage auf der Wand 9 ausgelegt. Der Flansch 42 ist in einem Flanschbereich II angeordnet. Der Flanschbereich II reicht entlang der Abszisse AA' vom Stutzenbereich I bis zum der Trennmembran 3 zugewandte Ende des Prozessanschlusses 4. Mit dem Flansch 42 liegt der Prozessanschluss 4 an einer Aussenseite der Wand 9 auf und bildet somit eine stabile Auflage für den Druck- und Temperatursensor 1. Der Flansch 42 ist in der Querschnittsebene BC weitgehend kreisförmig mit einem maximalen Durchmesser von rund 11 mm. Der maximale Durchmesser des Stutzens 40 ist kleiner als der maximale Durchmesser des Flansches 42.

Der Prozessanschluss 4 weist einen Zuführkanal 41 auf. Der Zuführkanal 41 ist ausgelegt, Medium zur Trennmembran 3 führen. Der Zuführkanal 41 erstreckt sich parallel zur Abszisse AA' und reicht vom Mediumende bis zur Trennmembran 3. Der Zuführkanal 41 reicht durch den Stutzenbereich I und den Flanschbereich II. Der Zuführkanal 41 ist exzentrisch zur Abszisse AA' angeordnet. Form und Länge des Zuführkanals 41 sind so, damit er im Einsatz nicht mit Medium wie Abgas verstopfen kann. Der Zuführkanal 41 ist in der Querschnittsebene BC kreisförmig mit einem Durchmesser von rund 2.0 mm und einer Länge in axialer Richtung von rund 11 mm. Der Zuführkanal 41 bietet dem Medium daher minimalen Strömungswiderstand. Dies unterscheidet sich vom Zuführkanal der Schrift WO2013/143748A1, welcher Zuführkanal zentral einen Temperaturmessfühler aufweist und im Bereich der Trennmembran in einem schmalen Seitenspalt endet, was zu einem hohen Strömungswiderstand führt.

Der Druck- und Temperatursensor 1 weist ein Gehäuse 8 auf. Der Flansch 42 ist stoffschlüssig mit dem Gehäuse 8 verbunden. Das Gehäuse 8 ist hohlzylinderförmig und besteht aus mechanisch beständigem Material wie aus Reinmetallen, Nickellegierungen, Kobaltlegierungen, Eisenlegierungen, usw. Das Gehäuse 8 schützt den Druck- und Temperatursensor 1 vor schädlichen äusseren Einflüssen wie Schmutz, Feuchtigkeit, mechanische Schläge, usw. Der Stoffschluss erfolgt durch Diffusionsschweissen, Thermokompressionsbonden, Löten, usw. Vorzugsweise ist das Gehäuse 8 mehrteilig. Das Gehäuse 8 erstreckt sich bezüglich der Abszisse AA' radial ausserhalb eines Gehäuseunterteiles 6 und einer elektrischen Leiterplatte 7. Das Gehäuse 8 reicht vom Flansch 42 entlang der Abszisse AA' bis zu einem vom Mittelpunkt des Druck- und Temperatursensors 1 abgewandten Ende der elektrischen Leiterplatte 7 und endet dort in einem Signalkabelanschluss 10. Das Gehäuse 8 ist mechanisch mit dem Signalkabelanschluss 10 verbunden. Die mechanische Verbindung kann kraftschlüssig, formschlüssig, stoffschlüssig oder eine Kombination solcher mechanischer Verbindungsarten sein. Das Gehäuse 8 ist in der Querschnittsebene BC weitgehend kreisförmig mit einem maximalen Durchmesser von rund 11 mm.

Die Trennmembran 3 liegt in der Querschnittsebene BC. Ein Zentrum der Trennmembran 3 liegt im Mittelpunkt des Druck- und Temperatursensors 1. Die Trennmembran 3 verschliesst den Zuführkanal 41. Das Medium gelangt durch den Zuführkanal 41 vom Mediumende bis zur Trennmembran 3 und drückt mit einem zu erfassenden Druck gegen die Trennmembran 3. Im Bereich der Trennmembran 3 weitet sich der Zuführkanal 41 bezüglich der Abszisse AA' radial auf. Die Trennmembran 3 ist konzentrisch zum Zuführkanal 41 und somit exzentrisch zur Abszisse AA' angeordnet. Die Trennmembran 3 ist zylinderförmig und besteht aus mechanisch elastischem Material wie aus Reinmetallen, Nickellegierungen, Kobaltlegierungen, Eisenlegierungen, usw. Vorzugsweise ist die Trennmembran 3 einstückig. Die Trennmembran 3 weist eine sehr geringe Wandstärke von kleiner 0.5 mm, vorzugsweise von rund 0.1 mm, vorzugsweise von rund 0.025 mm auf. Eine Ausdehnung der Trennmembran 3 in der Querschnittsebene BC beträgt rund 8.5 mm.

Ein bezüglich der Abszisse AA' radial äusserer Rand der Trennmembran 3 ist stoffschlüssig mit dem Gehäuseunterteil 6 verbunden. Der Stoffschluss ist bis mindestens 50 bar druckdicht und erfolgt durch Diffusionsschweissen, Thermokompressionsbonden, Löten, usw. Das Gehäuseunterteil 6 ist konzentrisch zur Trennmembran 3 und somit exzentrisch zur Abszisse AA' angeordnet. Das Gehäuseunterteil 6 ist zylinderförmig und besteht aus mechanisch beständigem Material wie aus Reinmetallen, Nickellegierungen, Kobaltlegierungen, Eisenlegierungen, usw. Vorzugsweise ist das Gehäuseunterteil 6 einstückig. In einem Gehäuseunterteilbereich III erstreckt sich das Gehäuseunterteil 6 entlang der Abszisse AA' von der Trennmembran 3 bis zu einem vom Prozessanschluss 4 abgewandten Ende des Gehäuseunterteils 6. Ein bezüglich der Abszisse AA' radial äusserer Randbereich des Gehäuseunterteils 6 ist stegförmig und umgreift die Trennmembran 3 und liegt formschlüssig in einem nutförmigen radial äusseren Randbereich des Prozessanschlusses 4 an. Eine maximale Ausdehnung des Gehäuseunterteils 6 in der Querschnittsebene BC beträgt rund 9.5 mm. Eine maximale Ausdehnung des Gehäuseunterteils 6 entlang der Abszisse AA' beträgt rund 5.0 mm.

Der Druck- und Temperatursensor 1 weist mindestens ein Drucksensormodul 2 zur Erfassung des Druckes des Mediums auf. Das Drucksensormodul 2 ist auf der vom Prozessanschluss 4 abgewandten Seite der Trennmembran 3 angeordnet. Das Drucksensormodul 2 befindet sich in einem Raum 61 direkt hinter der Trennmembran 3. Der Raum 61 ist im Gehäuseunterteil 6 angeordnet. Der Raum 61 und das Drucksensormodul 2 sind konzentrisch zur Trennmembran 3 und somit exzentrisch zur Abszisse AA' angeordnet. Das Drucksensormodul 2 ist im Raum 61 stoffschlüssig mit dem Gehäuseunterteil 6 verbunden. Der Stoffschluss erfolgt durch Diffusionsschweissen, Thermokompressionsbonden, Löten, usw. Der Raum 61 ist ölgefüllt. Das Öl wie Silikonöl separiert die Trennmembran 3 vom Drucksensormodul 2. Die Trennmembran 3 steht über das Öl im mechanischen Kontakt mit dem Drucksensormodul 2. und das Öl überträgt den zu erfassenden Druck von der Trennmembran 3 auf das Drucksensormodul 2. Aufgrund ihrer sehr geringen Wandstärke ist die Trennmembran 3 elastisch und leitet auch kleine Druckänderungen des Mediums über das Öl an das Drucksensormodul 2 weiter, wodurch das Drucksensormodul 2 eine hohe Empfindlichkeit aufweist. Ein Messbereich des Drucksensormoduls 2 reicht bis 30 bar, vorzugsweise bis 50 bar. In diesem Messbereich trennt die Trennmembran 3 das Medium vom ölgefüllten Raum 61 mit dem Drucksensormodul 2 mediendicht. Trennmembran 3 und Öl machen das Drucksensormodul 2 somit medienresistent. Das Drucksensormodul 2 ist dem Medium somit nicht direkt ausgesetzt. Gerade ein chemisch aggressives Medium wie Abgas, Bremsflüssigkeit, Getriebeöl, Hydrauliköl, Kühlmittel, Kraftstoff, usw. kann mit dem Drucksensormodul 2 chemische Reaktionen eingehen und das Drucksensormodul 2 in seiner Funktionsfähigkeit beeinträchtigen, was negative Auswirkungen auf die Verfügbarkeit und Lebensdauer des Druck- und Temperatursensors 1 hat. Eine maximale Ausdehnung des Drucksensormoduls 2 in der Querschnittsebene BC beträgt rund 4.0 mm.

Das Drucksensormodul 2 umfasst einen piezoresistiven Membranchip und ein Substrat. Der piezoresistive Membranchip ist quaderförmig und besteht aus Halbleitermaterial wie Silizium, Germanium, usw. und verformt sich in Abhängigkeit eines erfassten Druckes elastisch. Der piezoresistive Membranchip weist eine Dicke und zwei Stirnflächen auf. Die Dicke ist wesentlich kleiner als eine Ausdehnung der Stirnflächen. Der piezoresistive Membranchip bildet somit eine Membran. Auf einer ersten Stirnfläche sind elektrische Widerstände als Dotierungen angeordnet und zu mindestens einer Wheatstone Messbrücke verschaltet. Der piezoresistive Membranchip bildet somit auch einen elektronischen Chip. Die elektrischen Widerstände sind aus Dotierungsmaterial wie Gallium, Phosphor, Bor, usw. Die Verformung des piezoresistiven Membranchips führt zu einer druckproportionalen elektrischen Widerstandsänderung der Wheatstone Messbrücke. Die erste Stirnfläche ist der Trennmembran 3 zugewandt. Eine zweite Stirnfläche des piezoresistiven Membranchips ist stoffschlüssig mit dem Substrat verbunden. Der Stoffschluss erfolgt durch Diffusionsschweissen, Thermokompressionsbonden, Löten, usw. Das Substrat ist zylinderförmig besteht aus Silizium oder Glas wie Borosilikatglas. Das Substrat trägt den piezoresistiven Membranchip mechanisch. Das Drucksensormodul 2 ist über das Substrat stoffschlüssig mit dem Raum 61 verbunden. Der Stoffschluss erfolgt durch Diffusionsschweissen, Thermokompressionsbonden, Löten, usw.

Enden der elektrischen Widerstände sind über elektrische Leiterbahnen stoffschlüssig mit elektrischen Leitern verbunden. Der Stoffschluss erfolgt durch Diffusionsschweissen, Thermokompressionsbonden, Löten, usw. Mindestens zwei erste elektrische Leiter 22, 22' greifen die elektrische Widerstandsänderung der Wheatstone Messbrücke als elektrische Spannungsänderung ab. Vorzugsweise greifen fünf erste elektrische Leiter 22, 22' die elektrische Widerstandsänderung der Wheatstone Messbrücke als elektrische Spannungsänderung ab. Die ersten elektrischen Leiter 22, 22' sind Drähte und bestehen aus elektrisch leitfähigem Material wie Aluminium, Silber, Gold, usw. Jeder erste elektrische Leiter 22, 22' ist von elektrischem Isolationsmaterial umgeben. Die ersten elektrischen Leiter 22, 22' verbinden das Drucksensormodul 2 elektrisch mit der elektrischen Leiterplatte 7. Die elektrische Leiterplatte 7 misst die elektrische Widerstandsänderung der Wheatstone Messbrücke als elektrische Spannungsänderung.

Mindestens ein erster Durchgang 62 ist im Gehäuseunterteil 6 angeordnet. Der erste Durchgang 62 erstreckt sich vom Raum 61 bis zum vom Prozessanschluss 4 abgewandten Ende des Gehäuseunterteils 6. Der erste Durchgang 62 verläuft parallel zur Abszisse AA'. Der erste Durchgang 62 ist exzentrisch zur Abszisse AA' angeordnet. Der erste Durchgang 62 verläuft bezüglich der Abszisse AA' radial ausserhalb des Drucksensormoduls 2. Der erste Durchgang 62 ist in der Querschnittsebene BC kreisförmig mit einem Durchmesser von rund 1.0 mm. Die ersten elektrischen Leiter 22, 22' reichen durch den ersten Durchgang 62 bis zur elektrischen Leiterplatte 7. Der erste Durchgang 62 mit den ersten elektrischen Leiern 22, 22' ist zur elektrischen Leiterplatte 7 hin öldicht abgedichtet, so dass über diesen Weg kein Öl aus dem Raum 61 entweichen kann. Vorzugsweise ist für jeden ersten elektrischen Leiter 22, 22' ein erster Durchgang 62 im Gehäuseunterteil 6 angelegt. Vorzugsweise erfolgt die öldichte Abdichtung des ersten Durchgangs 62 durch Verglasen des mindestens einen im ersten Durchgang 62 angeordneten ersten elektrischen Leiters 22, 22'.

Vorteilhafterweise bilden das Gehäuseunterteil 6, die Trennmembran 3 und das Drucksensormodul 2 ein Halbzeug. Zur Herstellung des Halbzeugs wird das zylinderförmige Gehäuseunterteil 6 aus dem Vollen gedreht. Mindestens ein erster Durchgang 62 wird im Gehäuseunterteil 6 gebohrt. Im Raum 61 wird das Drucksensormodul 2 stoffschlüssig mit dem Gehäuseunterteil 6 verbunden. Die ersten elektrischen Leiter 22, 22' werden in den ersten Durchgang 62 geschoben, bis dass sie am vom Prozessanschluss 4 abgewandten Ende des Gehäuseunterteils 6 aus dem ersten Durchgang 62 ragen. Der erste Durchgang 62 mit den ersten elektrischen Leiern 22, 22' wird durch Verglasen des mindestens einen im ersten Durchgang 62 angeordneten ersten elektrischen Leiters 22, 22' öldicht abgedichtet. Ein radial äusserer Rand der Trennmembran 3 wird stoffschlüssig mit dem Gehäuseunterteil 6 verbunden. Der Raum 61 wird mit Öl gefüllt, vorzugsweise durch eine figürlich nicht dargestellte Zuleitung, welche vorgängig wie der erste Durchgang 62 im Gehäuseunterteil 6 gebohrt wird und welche nach der Ölfüllung öldicht verschlossen wird. Das Halbzeug lässt sich separat herstellen und zwischenlagern. Das Halbzeug lässt sich als Gleichteil auch in anderen Drucksensoren, die keinen Temperaturmessfühler 5 aufweisen verwenden. Durch die Verwendung von gleichteiligen Drucksensormodulen 2 in unterschiedlichen Drucksensoren werden Skaleneffekte geschaffen, was die Herstellkosten tief hält.

Der Druck- und Temperatursensor 1 weist mindestens einen Temperaturmessfühler 5 zur Erfassung der Temperatur des Mediums auf. Der Temperaturmessfühler 5 ist in einer Hülse 51 angeordnet. Die Hülse 51 ist hohlzylinderförmig und besteht aus mechanisch und chemisch beständigem Material wie aus Reinmetallen, Nickellegierungen, Kobaltlegierungen, Eisenlegierungen, usw. Vorzugsweise ist die Hülse 51 einstückig. Die Hülse 51 erstreckt sich parallel zur Abszisse AA' und ist exzentrisch zur Abszisse AA' angeordnet. Die Hülse 51 ist ausgelegt, in das Medium zu ragen. Ein erstes Ende der Hülse 51 ragt in das Medium. Das erste Ende der Hülse 51 ist verschlossen. Das Medium drückt mit der zu erfassenden Temperatur gegen die Hülse 51. Ein zweites Ende der Hülse 51 ist offen. Die Hülse 51 ist in der Querschnittsebene BC kreisförmig mit einem Durchmesser von rund 1.2 mm. Die Hülse 51 weist eine sehr geringe Wandstärke von rund 0.25 mm, vorzugsweise von rund 0.1 mm auf. Aufgrund ihrer sehr geringen Wandstärke leitet die Hülse 51 die Temperatur des Mediums rasch an den Temperaturmessfühler 5 weiter, wodurch der Temperaturmessfühler 5 eine schnelle Ansprechzeit aufweist. Das zweite Ende der Hülse 51 ist mechanisch mit dem Prozessanschluss 4 verbunden. Die mechanische Verbindung ist bis mindestens 50 bar druckdicht und erfolgt stoffschlüssig durch Diffusionsschweissen, Thermokompressionsbonden, Löten, usw. Der Stoffschluss erfolgt zwischen einem Rand des zweiten Endes der Hülse 51 und einem Steg 44 des Stutzens 40. Der Steg 44 ist am Mediumende des Prozessanschlusses 4 angeordnet. Die Hülse 51 trennt das Medium vom Temperaturmessfühler 5 mediendicht. So kann chemisch aggressives Medium wie Abgas mit dem Temperaturmessfühler 5 keine chemische Reaktionen eingehen und den Temperaturmessfühler 5 in seiner Funktionsfähigkeit beeinträchtigen, was negative Auswirkungen auf die Verfügbarkeit und Lebensdauer des Druck- und Temperatursensors 1 hat.

Der Temperaturmessfühler 5 ist ein Kaltleiter mit positivem Temperaturkoeffizienten und besteht aus Drähten aus Platin, Nickel, usw. oder ein Heissleiter mit negativem Temperaturkoeffizienten und besteht aus Drähten aus Eisenoxid, Magnesiumdichromat, usw. Die zu erfassende Temperatur des Mediums erzeugt eine monotone elektrische Widerstandsänderung des Temperaturmessfühlers 5. Ein Messbereich des Temperaturmessfühlers 5 reicht bis 150°C, vorzugsweise bis 200°C. Der Temperaturmessfühler 5 weist ein Widerstandsthermometer und mindestens zwei zweite elektrische Leiter 52, 52' auf. Das Widerstandsthermometer ist im ersten Ende der Hülse 51 angeordnet. Erste Enden der zweiten elektrischen Leiter 52, 52' sind elektrisch und mechanisch mit dem Widerstandsthermometer verbunden. Zweite Enden der zweiten elektrischen Leiter 52, 52' reichen bis zur elektrischen Leiterplatte 7. Jeder zweite elektrische Leiter 52, 52' ist von elektrischem Isolationsmaterial umgeben. Die elektrische Leiterplatte 7 misst die elektrische Widerstandsänderung des Temperaturmessfühlers 5 an den zweiten Enden der zweiten elektrischen Leiter 52, 52'.

Ein zweiter Durchgang 43 erstreckt sich im Prozessanschluss 4 vom Stutzenbereich I bis zum Flanschbereich II. Die zweiten elektrischen Leiter 52, 52' sind im zweiten Durchgang 43 angeordnet. Die zweiten elektrischen Leiter 52, 52' sind im zweiten Durchgang 43 durch Stoffschluss mechanisch fixiert und können sich so in Folge von starken Vibrationen im Einsatz des Druck- und Temperatursensors 1 nicht an der Wandung des zweiten Durchgangs 43 aufreiben. Der Stoffschluss erfolgt vorzugsweise durch einen Klebstoff. Der zweite Durchgang 43 erstreckt sich vom Steg 44 bis zu einem vom Mediumende abgewandten Ende des Prozessanschlusses 4. Der zweite Durchgang 43 verläuft im Stutzenbereich I parallel zur Abszisse AA'. Der zweite Durchgang 43 ist im Stutzenbereich I exzentrisch zur Abszisse AA' angeordnet. Der zweite Durchgang 43 verläuft im Flanschbereich II schräg zur Abszisse AA'. Im Stutzenbereich I ist der zweite Durchgang 43 in der Querschnittsebene BC kreisförmig mit einem Durchmesser von rund 1.0 mm. Im Flanschbereich II ist der zweite Durchgang 43 im Querschnitt ebenfalls kreisförmig mit einem Durchmesser von ebenfalls rund 1.0 mm.

Der zweite Durchgang 43 und der Zuführkanal 41 des Prozessanschlusses 4 sind funktionsgerecht optimiert. So ist ein Durchmesser des zweiten Durchgangs 43 kleiner als ein Durchmesser des Zuführkanals 41. Der Durchmesser des zweiten Durchgangs 43 ist für die Anordnung der zweiten elektrischen Leiter 52, 52' ausreichend. Um dem Medium einen geringen Strömungswiderstand zu bieten, ist der Durchmesser des Zuführkanals 41 hingegen möglichst gross. Daraus folgt, dass der zweite Durchgang 43 exzentrischer zur Mitte des Druck- und Temperatursensors 1 angeordnet als der Zuführkanal 41. Der gegenseitige Abstand des zweiten Durchgangs 43 und der Zuführkanals 41 sowie die Wandstärke des Stutzens 40 sind im Stutzenbereich I so minimal gewählt, dass eine ausreichende mechanische Festigkeit gewährleistet ist. Der zweite Durchgang 43 und der Zuführkanal 41 sind durch die Wandstärke des Stutzens 40 mediendicht voneinander getrennt. Im Stutzenbereich I sind der zweite Durchgang 43 und der Zuführkanal 41 mit weitgehend minimalem Abstand zueinander angeordnet. Im Stutzenbereich I sind der zweite Durchgang 43 und der Zuführkanal 41 mit weitgehend gleicher minimale Wandstärke zur Aussenfläche des Stutzens 40 angeordnet.

Zur Herstellung des Prozessanschlusses 4 wird der zylinderförmige Prozessanschluss 4 mit Stutzen 40, Flansch 42 und Steg 44 aus dem Vollen gedreht. Der Zuführkanal 41 wird im Prozessanschluss 4 gebohrt. Der zweite Durchgang 43 wird durch eine Bohrung im Stutzenbereich I des Prozessanschlusses 4 und eine Bohrung im Flanschbereich II des Prozessanschlusses 4 hergestellt. verbunden. Das Widerstandsthermometer des Temperaturmessfühlers 5 wird in das erste Ende der Hülse 51 geschoben. Die zweiten elektrischen Leiter 52, 52' werden im Stutzenbereich I in den zweiten Durchgang 43 geschoben, bis dass sie im Flanschbereich II aus dem zweiten Durchgang 43 ragen. Ein Rand des zweiten Endes der Hülse 51 wird mit dem Steg 44 stoffschlüssig verbunden. Die zweiten elektrischen Leiter 52, 52' werden im zweiten Durchgang 43 mit einem Klebstoff mechanisch fixiert.

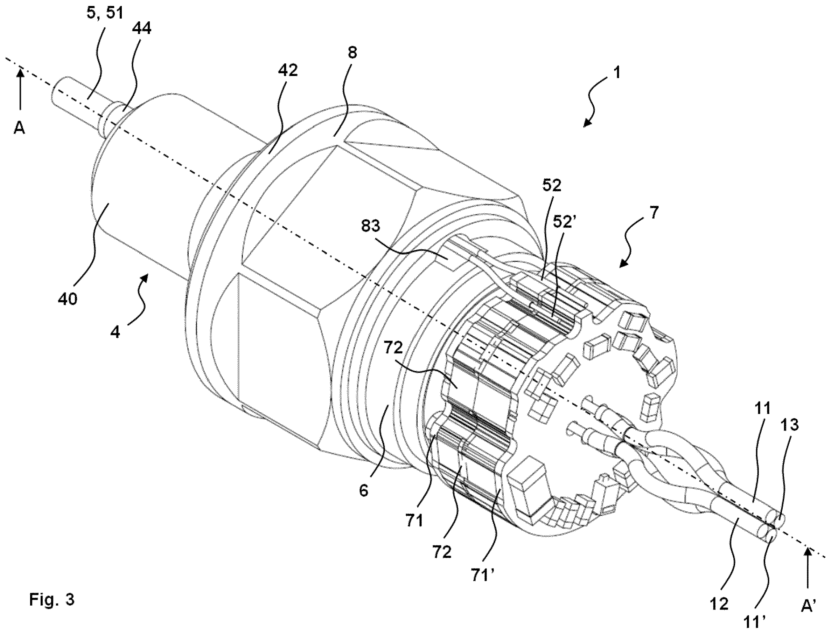

Der zweite Durchgang 43 des Prozessanschlusses 4 mündet in einen dritten Durchgang 83 im Gehäuse 8. Der dritte Durchgang 83 erstreckt sich im Gehäuse 8 vom Flanschbereich II bis zum Gehäuseunterteilbereich III. Die zweiten elektrischen Leiter 52, 52' sind im dritten Durchgang 83 angeordnet. Der dritte Durchgang 83 erstreckt sich entlang der Abszisse AA' von einem dem zweiten Durchgang 43 zugewandten Ende des Gehäuses 8 bis zu einem vom zweiten Durchgang 43 abgewandten Ende des Gehäuses 8. Der dritte Durchgang 83 verläuft parallel zur Abszisse AA'. Der dritte Durchgang 83 ist exzentrisch zur Abszisse AA' angeordnet. Der dritte Durchgang 83 verläuft bezüglich der Abszisse AA' radial ausserhalb des Gehäuseunterteils 6. Der dritte Durchgang 83 verläuft bezüglich der Abszisse AA' radial ausserhalb des Drucksensormoduls 2. Der dritte Durchgang 83 ist durch den bezüglich der Abszisse AA' radial äusseren Randbereich des Gehäuseunterteils 6 und den nutförmigen radial äusseren Randbereich des Prozessanschlusses 4, welche formschlüssig miteinander verbunden sind, mediendicht vom Medium getrennt. Der dritte Durchgang 83 ist in der Querschnittsebene BC kreissegmentförmig mit einem Radius von rund 0.75 mm. In Fig. 3 ist der dritten Durchgang 83 im Querschnitt halbkreisförmig. Ein halbkreisförmiger Durchgang 83 ist durch eine Bohrung einfach und rasch zu bewerkstelligen. Die zweiten elektrischen Leiter 52, 52' reichen durch den zweiten Durchgang 43 und durch den dritten Durchgang 83 bis zur elektrischen Leiterplatte 7. Die zweiten elektrischen Leiter 52, 52' sind im dritten Durchgang 83 durch Stoffschluss mechanisch fixiert und können sich so in Folge von starken Vibrationen im Einsatz des Druck- und Temperatursensors 1 nicht an der Wandung des dritten Durchgangs 83 aufreiben. Der Stoffschluss erfolgt vorzugsweise durch einen Klebstoff.

Der Druck- und Temperatursensor 1 sieht somit eine funktional getrennte Anordnung von Drucksensormodul 2 und Temperaturmessfühler 5 vor. Die getrennte Anordnung ist räumlich, denn das Drucksensormodul 2 ist auf der vom Zuführkanal 41 abgewandten Seite der Trennmembran 3 angeordnet, während der Temperaturmessfühler 5 auf der dem Zuführkanal 41 zugewandten Seite der Trennmembran 3 angeordnet ist. Das Drucksensormodul 2 ist im Gehäuseunterteil 6 angeordnet und befindet sich in einem Halbzeug, dass unabhängig vom Temperaturmessfühler 5 ist. Der Temperaturmessfühler 5 ist im Prozessanschluss 4 angeordnet. Die getrennte Anordnung betrifft aber auch die zweiten elektrischen Leiter 52, 52' des Temperaturmessfühlers 5, welche im Prozessanschluss 4 in einem vom Zuführkanal 41 separaten zweiten Durchgang 43 angeordnet sind, und welche im Gehäuse 8 in einem vom Halbzeug mit dem Drucksensormodul 2 separaten dritten Durchgang 83 angeordnet sind. Die Herstellung des Druck- und Temperatursensors 1 ist somit bedeutend weniger aufwändig als die Lehre der Schrift WO2013/143748A1 und deshalb besonders kostengünstig.

Die elektrische Leiterplatte 7 führt mehrere Mess- und Verstärkungsfunktionen aus. Die elektrische Leiterplatte 7 misst die elektrische Spannungsänderung des Drucksensormoduls 2 und die elektrische Widerstandsänderung des Temperaturmessfühlers 5. Die elektrische Leiterplatte 7 verstärkt die gemessene elektrische Spannungsänderung des Drucksensormoduls 2 und gemessene die elektrische Widerstandsänderung des Temperaturmessfühlers 5. Die elektrische Leiterplatte 7 gibt die verstärkte gemessene elektrischen Spannungsänderungen des Drucksensormoduls 2 und die verstärkte gemessene elektrischen Widerstandsänderungen des Temperaturmessfühlers 5 als Ausgangssignale aus. Die Ausgangssignale sind elektrische Gleichspannungen.

Die elektrische Leiterplatte 7 ist mechanisch mit dem Gehäuseunterteil 6 verbunden. Die mechanische Verbindung erfolgt am vom Prozessanschluss 4 abgewandten Ende des Gehäuseunterteils 6. Die Verbindung kann kraftschlüssig, formschlüssig, stoffschlüssig oder eine Kombination solcher mechanischer Verbindungsarten sein. Die elektrische Leiterplatte 7 erstreckt sich entlang der Abszisse AA' und ist zentrisch zur Abszisse AA' angeordnet. Eine maximale Ausdehnung der elektrischen Leiterplatte 7 in der Querschnittsebene BC beträgt rund 9.5 mm. Eine maximale Ausdehnung der elektrischen Leiterplatte 7 entlang der Abszisse AA' beträgt rund 4.0 mm.

Die elektrische Leiterplatte 7 ist segmentiert und weist mehrere Segmente 71, 71' auf. Die Segmente 71, 71' sind aus elektrisch isolierendem Material wie Epoxidharz, Polytetrafluorethylen, Polyimid, usw. Vorzugsweise weist die elektrische Leiterplatte 7 zwei weitgehend kreisförmige Segmente 71, 71' auf. Die Segmente 71, 71' liegen in der Querschnittsebene BC und sind entlang der Abszisse AA' zueinander beabstandet angeordnet. Die elektronischen Komponenten wie elektrische Widerstände, elektrische Kapazitäten, Halbleiterelemente, Prozessoren, usw. sind auf den Segmenten 71, 71' bestückt. Die elektronischen Komponenten sind stoffschlüssig mit den Segmenten 71, 71' verbunden. Der Stoffschluss erfolgt durch Diffusionsschweissen, Thermokompressionsbonden, Löten, usw. Die elektrische Leiterplatte 7 weist mindestens einen Abstandshalter 72 aus elektrisch isolierendem Material wie Epoxidharz, Polytetrafluorethylen, Polyimid, usw. auf. Der Abstandshalter 72 beabstandet die Segmente 71, 71' voneinander. Der Abstandshalter 72 weist eine weitgehend kreisförmige Platte und mehrere Flügel auf. Die Platte hat weitgehend den gleichen Durchmesser wie die Segmente 71, 71' und liegt in der Querschnittsebene BC. Die Flügel stehen senkrecht von der Platte ab und erstrecken sich parallel zur Abszisse AA'. Platte und Flügel sind einstückig. Die elektrische Leiterplatte 7 weist elektrische Signalleiter auf. Die elektrischen Signalleiter sind aus elektrisch leitfähigem Material wie aus Reinmetallen, Nickellegierungen, Kobaltlegierungen, Eisenlegierungen, usw. Die elektrischen Signalleiter erstrecken sich auf den Segmenten 71, 71'. Die elektrischen Signalleiter sind stoffschlüssig mit den elektronischen Komponenten verbunden. Der Stoffschluss erfolgt durch Diffusionsschweissen, Thermokompressionsbonden, Löten, usw. Die elektrischen Signalleiter verbinden die elektronischen Komponenten zu mehreren elektrischen Schaltungen zur Ausführung der Mess-, Verstärkungsfunktionen. Die ersten elektrischen Leiter 22, 22' und die zweiten elektrischen Leiter 52, 52' sind stoffschlüssig mit elektrischen Signalleiter verbunden. Der Stoffschluss erfolgt durch Diffusionsschweissen, Thermokompressionsbonden, Löten, usw.

Die segmentierte elektrische Leiterplatte 7 nutzt den im Gehäuse 8 zur Verfügung stehenden Platz sehr wirksam aus. Die beiden senkrecht zur Abszisse AA' orientierten Segmente 71, 71' bieten vier Oberflächen für die Bestückung der elektronischen Komponenten. Die Segmente 71, 71' erstrecken sich bezüglich der Abszisse AA' radial bis zum Gehäuse 8 und lassen so in radialer Richtung keinen Platz ungenutzt. Die Flügel der Abstandshalter 72 sind in ihrer Länge entlang der Abszisse AA' an die Grösse der elektronischen Komponenten angepasst, so dass auch axialer Richtung kein Platz ungenutzt ist. Das von der elektrischen Leiterplatte 7 im Gehäuse 8 benötigte Volumen entspricht somit weitgehend demjenigen des Gehäuseunterteils 6. Im Unterschied dazu weist der Sensor zur Erfassung von Druck- und Temperatur der Schrift WO2013/143748A1 einen Gehäuseinnenraum für eine Elektronik im Gehäuse des Sensors auf, welcher Gehäuseinnenraum mehr als dreimal so viel Volumen wie das Gehäuseunterteil beansprucht.

Der Druck- und Temperatursensor 1 weist zwei Ausgangssignalleiter 11, 11', einen elektrischen Masseleiter 12, und einen elektrischen Stromversorgungsleiter 13 auf. Die Ausgangssignalleiter 11, 11', der elektrische Masseleiter 12 und der elektrische Stromversorgungsleiter 13 sind stoffschlüssig mit entsprechenden elektrischen Signalleitern verbunden. Der Stoffschluss erfolgt durch Diffusionsschweissen, Thermokompressionsbonden, Löten, usw. Ein erster Ausgangssignalleiter 11 übermittelt verstärkte gemessene elektrische Spannungsänderungen des Drucksensormoduls 2 als Ausgangssignale. Ein zweiter Ausgangssignalleiter 11' übermittelt verstärkte gemessene elektrische Widerstandsänderungen des Temperaturmessfühlers 5 als Ausgangssignale. Der elektrische Masseleiter 12 stellt ein gemeinsames elektrisches Massepotential für das Drucksensormodul 2, den Temperaturmessfühler 5 und die elektrische Leiterplatte 7 bereit. Der elektrische Stromversorgungsleiter 12 übermittelt eine elektrische Gleichspannung an die elektrische Leiterplatte 7. Die zwei Ausgangssignalleiter 11, 11', der elektrische Masseleiter 12 und der elektrische Stromversorgungsleiter 13 reichen über den Signalkabelanschluss 10 in ein Signalkabel. An einem vom Druck- und Temperatursensor 1 entfernten Ende der Ausgangssignalleiter 11, 11' im Signalkabel sind die Ausgangssignale abgreifbar und weiterverarbeitbar. An einem vom Druck- und Temperatursensor 1 entfernten Ende des elektrischen Masseleiters 12 im Signalkabel ist das gemeinsame elektrische Massepotential anlegbar. An einem vom Druck- und Temperatursensor 1 entfernten Ende des elektrischen Stromversorgungsleiters 13 im Signalkabel ist die elektrische Gleichspannung einspeisbar.

Im Sinne der Erfindung beschreibt der relative Ausdrücke "weitgehend" Formangaben und der relative Ausdruck "rund" beschreibt Massangaben. Durch Verwendung dieser relativen Ausdrücke sind die Formangaben und die Massangaben so zu verstehen, dass sie auch Variationen in der Grössenordnung von +/- 20% umfassen. Die Formangabe eines "weitgehend kreisförmigen Durchmessers" eines steifen Segments 71, 71' kann somit auch als steifes Segment 71, 71' mit gezahnter Kreisform wie in Fig. 3 dargestellt realisiert sein. Die Massangabe der Ausdehnung eines Drucksensormoduls 2 von "rund 4.0 mm" umfasst somit auch eine Ausdehnung des Drucksensormoduls 2 von 3.2 mm oder auch 4.8 mm.

Bei Kenntnis der vorliegenden Erfindung kann der Fachmann vielfältige Variationen der bevorzugten Ausführungsform realisieren, ohne den Rahmen der Erfindung zu verlassen. Bei Kenntnis der vorliegenden Erfindung kann der Fachmann auch ein Halbzeug mit bedeutend kleineren äusseren Abmessungen verwenden. So kann eine maximale Ausdehnung des Drucksensormoduls in der Querschnittsebene nur rund 2.0 mm betragen, also rund viermal kleiner sein. Dementsprechend kann eine Ausdehnung der Trennmembran 3 in der Querschnittsebene dann rund 5.0 mm betragen und eine maximale Ausdehnung des Gehäuseunterteils in der Querschnittsebene kann dann rund 6.0 mm betragen. Auch kann der Fachmann anstatt eines Signalkabelanschlusses eine Signalkabelbuchse vorsehen. Eine solche Ausführungsform ist figürlich nicht dargestellt. Die Signalkabelbuchse ist dann so ausgeführt, dass sie einen Signalkabelstecker mit einem Signalkabel aufnimmt. Die Signalkabelbuchse übermittelt die Ausgangssignale der Ausgangssignalleiter in den Signalkabelstecker und das Signalkabel und sie übermittelt die elektrische Gleichspannung vom Signalkabel über den Signalkabelstecker in die elektrischen Stromversorgungsleiter.

### Bezugszeichenliste

- 1: Druck- und Temperatursensor
- 2: Drucksensormodul
- 3: Trennmembran
- 4: Prozessanschluss
- 5: Temperaturmessfühler
- 6: Gehäuseunterteil
- 7: elektrische Leiterplatte
- 8: Gehäuse
- 9: Wand
- 10: Signalkabelanschluss
- 11, 11': Ausgangssignalleiter
- 12: elektrischer Masseleiter
- 13: elektrischer Stromversorgungsleiter
- 22, 22': erster elektrischer Leiter
- 40: Stutzen
- 41: Zuführkanal
- 42: Flansch
- 43: zweiter Durchgang
- 44: Steg
- 51: Hülse
- 52, 52': zweiter elektrischer Leiter
- 61: Raum
- 62: erster Durchgang
- 71, 71': Segment
- 72: Abstandshalter
- 83: dritter Durchgang
- AA': Abszisse
- BB': Ordinate
- BC: Querschnittsebene
- CC': Applikate
- I: Stutzenbereich
- II: Flanschbereich
- III: Gehäuseunterteilbereich

## Patentansprüche

1. Druck- und Temperatursensor (1), mit einem Drucksensormodul (2) zur Erfassung eines Druckes eines Mediums; mit einem Temperaturmessfühler (5) zur Erfassung der Temperatur des Mediums; mit einer Hülse (51), zur mediendichten Trennung des Mediums vom Temperaturmessfühler (5) und zur Übertragung der Temperatur vom Medium auf den Temperaturmessfühler (5); ein erstes Ende der Hülse (51) ist ausgelegt, in das Medium zu ragen; der Temperaturmessfühler (5) ist in der Hülse (51) angeordnet; der Temperaturmessfühler (5) weist ein Widerstandsthermometer und zwei elektrische Leiter (52, 52') auf, das Widerstandsthermometer ist im ersten Ende der Hülse (51) angeordnet, erste Enden der zwei elektrischen Leiter (52, 52') sind im ersten Ende der Hülse (51) elektrisch und mechanisch mit dem Widerstandsthermometer verbunden; mit einer elektrischen Leiterplatte (7); und mit einem Prozessanschluss (4), der einen Zuführkanal (41) aufweist; wobei der Druck- und Temperatursensor (1) eine Trennmembran (3) zur mediendichten Trennung des Mediums vom Drucksensormodul (2) und zur Übertragung des Druckes vom Medium auf das Drucksensormodul (2) aufweist; der Zuführkanal (41) ausgelegt ist, Medium zur Trennmembran (3) zu führen; das Drucksensormodul (2) auf einer vom Zuführkanal (41) abgewandten Seite der Trennmembran (3) angeordnet ist; der Druck- und Temperatursensor (5) ein Gehäuseunterteil (6) aufweist, in dem ein Raum (61) angeordnet ist; dass sich das Drucksensormodul (2) im Raum (61) direkt hinter der Trennmembran (3) befindet; der Temperaturmessfühler (5) auf einer dem Zuführkanal (41) zugewandten Seite der Trennmembran (3) angeordnet ist; die elektrische Leiterplatte (7) an einem vom Prozessanschluss (4) abgewandten Ende des Gehäuseunterteils (6) mechanisch mit dem Gehäuseunterteil (6) verbunden ist; und die elektrische Leiterplatte (7) zentrisch zur Mitte des Druck- und Temperatursensors (1) angeordnet ist; **dadurch gekennzeichnet, dass** ein Steg an einem Mediumende des Prozessanschlusses angeordnet ist; dass sich ein zweiter Durchgang im Prozessanschluss vom Steg bis zu einem der Trennmembran zugewandten Ende des Prozessanschlusses erstreckt; dass ein Rand des zweiten Endes der Hülse stoffschlüssig mit dem Steg verbunden ist; dass die zwei elektrischen Leiter durch den zweiten Durchgang bis zur elektrischen Leiterplatte reichen; und dass ein radial äußerer Rand der Trennmembran stoffschlüssig mit dem Gehäuseunterteil verbunden ist.

2. Druck- und Temperatursensor (1) nach Anspruch 1, **dadurch gekennzeichnet, dass** der Prozessanschluss (4) am Mediumende in einem Stutzenbereich (I) als Stutzen (40) ausgebildet ist; dass der Stuzen (40) den Steg (44) aufweist; dass der Prozessanschluss (4) am der Trennmembran (3) zugewandten Ende in einem Flanschbereich (II) als Flansch (42) ausgebildet ist; dass ein maximaler Durchmesser des Stutzens (40) kleiner als ein maximaler Durchmesser des Flansches (42) ist; dass der zweite Durchgang (43) im Stutzenbereich (I) parallel zu einer axialen Richtung des Druck- und Temperatursensors (1) verläuft; und dass der zweite Durchgang (43) im Flanschbereich (II) schräg zur axialen Richtung des Druck- und Temperatursensors (1) verläuft.

3. Druck- und Temperatursensor (1) nach Anspruch 2, **dadurch gekennzeichnet, dass** der Zuführkanal (41) parallel zur axialen Richtung des Druck- und Temperatursensors (1) verläuft; dass der Zuführkanal (41) exzentrisch zu einer Mitte des Druck- und Temperatursensors (1) angeordnet ist; und dass der zweite Durchgang (43) im Stutzenbereich (I) exzentrisch zur Mitte des Druck- und Temperatursensors (1) angeordnet ist.

4. Druck- und Temperatursensor (1) nach Anspruch 3, **dadurch gekennzeichnet, dass** ein Durchmesser des zweiten Durchgangs (43) kleiner als ein Durchmesser des Zuführkanals (41) ist; dass der zweite Durchgang (43) exzentrischer zur Mitte des Druck- und Temperatursensors (1) angeordnet ist als der Zuführkanal (41); dass der zweite Durchgang (43) und der Zuführkanal (41) im Stutzenbereich (I) mit weitgehend minimalem Abstand zueinander angeordnet sind; und dass der zweite Durchgang (43) und der Zuführkanal (41) im Stutzenbereich (I) mit weitgehend gleicher minimaler Wandstärke zu einer Aussenfläche des Stutzens (40) angeordnet sind.

5. Druck- und Temperatursensor (1) nach einem der Ansprüche 3 oder 4, **dadurch gekennzeichnet, dass** die Trennmembran (3) und das Gehäuseunterteil (6) konzentrisch zum Zuführkanal (41) angeordnet sind.

6. Druck- und Temperatursensor (1) nach Anspruch 5, **dadurch gekennzeichnet, dass** der Druck- und Temperatursensor (1) ein Gehäuse (8) aufweist; dass sich das Gehäuse (8) radial ausserhalb des Gehäuseunterteils (6) erstreckt; dass das Gehäuse (8) einen dritten Durchgang (83) aufweist; und dass sich der dritte Durchgang (83) von einem dem zweiten Durchgang (43) zugewandten Ende des Gehäuses (6) bis zu einem dem zweiten Durchgang (43) abgewandten Ende des Gehäuses (6) erstreckt.

7. Druck- und Temperatursensor (1) nach Anspruch 6, **dadurch gekennzeichnet, dass** der zweite Durchgang (43) des Prozessanschlusses (4) in den dritten Durchgang (83) des Gehäuses (8) mündet; und dass die zweiten elektrischen Leiter (52, 52') im dritten Durchgang (83) angeordnet sind.

8. Druck- und Temperatursensor (1) nach Anspruch 7, **dadurch gekennzeichnet, dass** die zweiten elektrischen Leiter (52, 52') im zweiten Durchgang (43) durch Stoffschluss mechanisch fixiert sind und/oder die zweiten elektrischen Leiter (52, 52') im dritten Durchgang (83) durch Stoffschluss mechanisch fixiert sind.

9. Druck- und Temperatursensor (1) nach einem der Ansprüche 6 bis 8, **dadurch gekennzeichnet, dass** der dritte Durchgang (83) parallel zur axialen Richtung des Druck- und Temperatursensors (1) verläuft; und dass der dritte Durchgang (83) exzentrisch zur Mitte des Druck- und Temperatursensors (1) angeordnet ist.

10. Druck- und Temperatursensor (1) nach Anspruch 1, **dadurch gekennzeichnet, dass** die elektrische Leiterplatte (7) mehrere Segmente (71, 71') aufweist; dass die elektrische Leiterplatte (7) mindestens einen Abstandshalter (72) aufweist; und dass der Abstandshalter (72) die Segmente (71, 71') entlang einer axialen Richtung des Druck- und Temperatursensors (1) voneinander beabstandet.

11. Druck- und Temperatursensor (1) nach Anspruch 10, **dadurch gekennzeichnet, dass** die elektrische Leiterplatte (7) dazu konfiguriert ist, mehrere Mess- und Verstärkungsfunktionen auszuführen.

12. Druck- und Temperatursensor (1) nach einem der Ansprüche 1 oder 11, **dadurch gekennzeichnet, dass** der Druck- und Temperatursensor (1) genau zwei Ausgangssignalleiter (11, 11'), einen elektrischen Masseleiter (12) und einen elektrischen Stromversorgungsleiter (13) aufweist; dass ein erster Ausgangssignalleiter (11) verstärkte gemessene elektrische Spannungsänderungen des Drucksensormoduls (2) als Ausgangssignale übermittelt; dass ein zweiter Ausgangssignalleiter (11') verstärkte gemessene elektrische Widerstandsänderungen des Temperaturmessfühlers (5) als Ausgangssignale übermittelt; dass der elektrische Masseleiter (12) ein gemeinsames elektrisches Massepotential für das Drucksensormodul (2), den Temperaturmessfühler (5) und die elektrische Leiterplatte (7) bereitstellt; und dass der elektrische Stromversorgungsleiter (12) eine elektrische Gleichspannung an die elektrische Leiterplatte (7) übermittelt.

## Claims

1. A pressure and temperature sensor (1) comprising a pressure sensor module (2) for capturing a pressure of a medium; a temperature probe (5) for detecting the temperature of the medium; a sleeve (51) for separating the medium from the temperature probe (5) in a media-tight manner and for transmitting the temperature from the medium to the temperature probe (5); wherein a first sleeve end (51) is designed to project into the medium; the temperature probe (5) is arranged within the sleeve (51); the temperature probe (5) comprises a resistance thermometer and two electrical conductors (52, 52'); said resistance thermometer being arranged in the first sleeve end (51), first ends of the two electrical conductors (52, 52') being electrically and mechanically connected to the resistance thermometer in the first sleeve end (51); comprising an electrical circuit board (7) and comprising a process connection (4) that comprises a supply channel (41); wherein said pressure and temperature sensor (1) comprises a separating membrane (3) for media-tight separation of the medium from the pressure sensor module (2) and for transmitting the pressure from the medium to the pressure sensor module (2); said supply channel (41) is adapted to supply medium to the separating membrane (3); said pressure sensor module (2) is arranged on a side of the separating membrane (3) that faces away from the supply channel (41); said pressure and temperature sensor (5) comprises a lower housing part (6) having a space (61) arranged therein; the pressure sensor module (2) is arranged in said space (61) directly behind the separating membrane (3); the temperature probe (5) is arranged on a side of the separating membrane (3) that faces the supply channel (41); the electrical circuit board (7) is mechanically connected to the lower housing part (6) at an end of the lower housing part (6) that faces away from the process connection (4); and the electrical circuit board (7) is arranged centrally with respect to the center of the pressure and temperature sensor (1); **characterized in that** a rib is arranged at a medium end of the process connection; a second passage extends in the process connection from the rib to an end of the process connection that faces the separating membrane; an edge of the second end of the sleeve is connected to the rib via a material bond; the two electrical connectors extend through the second passage up to the electrical circuit board; and **in that** a radially outer edge of the separating membrane is connected to the lower housing part via a material bond.

2. The pressure and temperature sensor (1) according to claim 1, **characterized in that** the process connection (4) is formed as a nozzle (40) in a nozzle portion (I) at its medium end; said nozzle (40) comprises the rib (44); the process connection (4) is formed as a flange (42) in a flange portion (II) at its end that faces the separating membrane (3); a maximum diameter of the nozzle (40) is smaller than a maximum diameter of said flange (42); the second passage (43) extends parallel to an axial direction of the pressure and temperature sensor (1) in the nozzle portion (I); and the second passage (43) extends obliquely to the axial direction of the pressure and temperature sensor (1) in the flange portion (II).

3. The pressure and temperature sensor (1) according to claim 2, **characterized in that** the supply channel (41) extends parallel to the axial direction of the pressure and temperature sensor (1); the supply channel (41) is arranged off-center with respect to a center of the pressure and temperature sensor (1); and **in that** in the nozzle portion (I) the second passage (43) is arranged off-center with respect to the center of the pressure and temperature sensor (1).

4. The pressure and temperature sensor (1) according to claim 3, **characterized in that** a diameter of the second passage (43) is smaller than a diameter of the supply channel (41); the second passage (43) is arranged more off-center with respect to the center of the pressure and temperature sensor (1) than the supply channel (41); in the nozzle portion (I) the second passage (43) and the supply channel (41) are arranged at a substantially minimum distance from each other; and **in that** in the nozzle portion (I) the second passage (43) and the supply channel (41) are arranged with substantially the same minimum wall thickness to an outer surface of the nozzle (40) .

5. The pressure and temperature sensor (1) according to any of claims 3 or 4, **characterized in that** the separating membrane (3) and the lower housing part (6) are arranged concentrically with respect to the supply channel (41).

6. The pressure and temperature sensor (1) according to claim 5, **characterized in that** the pressure and temperature sensor (1) comprises a housing (8); the housing (8) extends radially outside of the lower housing part (6); the housing (8) comprises a third passage (83); and **in that** said third passage (83) extends from an end of the housing (6) that faces the second passage (43) up to an end of the housing (6) that faces away from the second passage (43).

7. The pressure and temperature sensor (1) according to claim 6, **characterized in that** the second passage (43) of the process connection (4) ends in the third passage (83) of the housing (8); and **in that** the second electrical conductors (52, 52') are arranged in the third passage (83) .

8. The pressure and temperature sensor (1) according to claim 7, **characterized in that** the second electrical conductors (52, 52') are mechanically fixed in the second passage (43) by a material bond and/or the second electrical conductors (52, 52') are mechanically fixed in third passage (83) by a material bond.

9. The pressure and temperature sensor (1) according to any of claims 6 to 8, **characterized in that** the third passage (83) extends parallel to the axial direction of the pressure and temperature sensor (1); and **in that** the third passage (83) is arranged off-center with respect to the center of the pressure and temperature sensor (1).

10. The pressure and temperature sensor (1) according to claim 1, **characterized in that** the electrical circuit board (7) comprises a plurality of segments (71, 71'); the electrical circuit board (7) comprises at least one spacer (72); and **in that** said segments (71, 71') are spaced apart from each other along an axial direction of the pressure and temperature sensor (1) by said spacer (72) .

11. The pressure and temperature sensor (1) according to claim 10, **characterized in that** the electrical circuit board (7) is adapted to carry out a plurality of measuring and amplifying functions.

12. The pressure and temperature sensor (1) according to any of claims 1 or 11, **characterized in that** the pressure and temperature sensor (1) comprises exactly two output signal conductors (11, 11'), an electrical ground conductor (12) and an electrical power supply conductor (13); a first output signal conductor (11) transmits measured and amplified electrical voltage changes of the pressure sensor module (2) as the output signals; a second output signal conductor (11') transmits measured and amplified electrical resistance changes of the temperature probe (5) as the output signals; the electrical ground conductor (12) provides a common electrical ground potential for the pressure sensor module (2), the temperature probe (5) and the electrical circuit board (7); and **in that** the electrical power supply conductor (12) transmits an electrical DC voltage to the electrical circuit board (7).

## Revendications

1. Capteur de pression et de température (1) comprenant un module de capteur de pression (2) pour capturer la pression d'un milieu; une sonde de température (5) pour détecter la température du milieu; un manchon (51) pour séparer le milieu de la sonde de température (5) d'une manière étanche au milieu et pour transmettre la température du milieu à la sonde de température (5); dans lequel une première extrémité de manchon (51) est conçue de manière à ce qu'elle fasse saillie dans le milieu; la sonde de température (5) est disposée à l'intérieur du manchon (51); la sonde de température (5) comprend un thermomètre à résistance et deux conducteurs électriques (52, 52'); ledit thermomètre à résistance étant disposé dans la première extrémité de manchon (51), des premières extrémités des deux conducteurs électriques (52, 52') étant connectées électriquement et mécaniquement au thermomètre à résistance dans la première extrémité de manchon (51); comprenant une carte de circuit électrique (7) et comprenant un raccord process (4) comportant un canal d'alimentation (41); dans lequel ledit capteur de pression et de température (1) comprend une membrane de séparation (3) pour établir une séparation étanche au milieu du module de capteur de pression (2) vis-à-vis le milieu et pour transmettre la pression du milieu au module de capteur de pression (2); ledit canal d'alimentation (41) est adapté pour fournir du milieu à la membrane de séparation (3); ledit module de capteur de pression (2) est disposé sur le côté de la membrane de séparation (3) opposé au canal d'alimentation (41); ledit capteur de pression et de température (5) comprend une partie de boîtier inférieure (6) dans laquelle est disposé un espace (61); le module de capteur de pression (2) est disposé dans ledit espace (61) directement derrière la membrane de séparation (3); la sonde de température (5) est disposée sur un côté de la membrane de séparation (3) faisant face au canal d'alimentation (41); la carte de circuit électrique (7) est connectée mécaniquement à la partie de boîtier inférieure (6) à une extrémité de la partie de boîtier inférieure (6) opposée au raccord process (4); et la carte de circuit électrique (7) est disposée centralement par rapport au centre du capteur de pression et de température (1); **caractérisé en ce qu'**une nervure est disposée à une extrémité de milieu du raccord process; un deuxième passage s'étend dans le raccord process depuis la nervure jusqu'à une extrémité du raccord process faisant face à la membrane de séparation; un bord de la deuxième extrémité du manchon est connecté à la nervure par une liaison de matière; les deux connecteurs électriques s'étendent à travers le deuxième passage jusqu'à la carte de circuit électrique; et **en ce qu'**un bord radialement extérieur de la membrane de séparation est connecté à la partie inférieure de boîtier par une liaison de matière.

2. Capteur de pression et de température (1) selon la revendication 1, **caractérisé en ce que** dans une partie de buse (I) à son extrémité de milieu le raccord process (4) est formé en forme de buse (40); ladite buse (40) comprend la nervure (44); dans une partie de bride (II) à son extrémité faisant face à la membrane de séparation (3) le raccord process (4) est formée en forme de bride (42); un diamètre maximum de la buse (40) est inférieur à un diamètre maximum de ladite bride (42); dans la partie de buse (I) le deuxième passage (43) s'étend parallèlement à une direction axiale du capteur de pression et de température (1); et dans la partie de bride (II) le deuxième passage (43) s'étend obliquement par rapport à la direction axiale du capteur de pression et de température (1).

3. Capteur de pression et de température (1) selon la revendication 2, **caractérisé en ce que** le canal d'alimentation (41) s'étend parallèlement à la direction axiale du capteur de pression et de température (1); le canal d'alimentation (41) est disposé décentré par rapport à un centre du capteur de pression et de température (1); et **en ce que** dans la partie de buse (I) le deuxième passage (43) est disposé décentré par rapport au centre du capteur de pression et de température (1).

4. Capteur de pression et de température (1) selon la revendication 3, **caractérisé en ce qu'**un diamètre du deuxième passage (43) est inférieur à un diamètre du canal d'alimentation (41); le deuxième passage (43) est disposé plus excentré par rapport au centre du capteur de pression et de température (1) que le canal d'alimentation (41); dans la partie de buse (I), le deuxième passage (43) et le canal d'alimentation (41) sont disposés à une distance sensiblement minimale l'un de l'autre; et **en ce que** dans la partie de buse (I) le deuxième passage (43) et le canal d'alimentation (41) sont disposés avec sensiblement la même épaisseur de paroi minimale par rapport à une surface extérieure de la buse (40).

5. Capteur de pression et de température (1) selon l'une quelconque des revendications 3 ou 4, **caractérisé en ce que** la membrane de séparation (3) et la partie inférieure de boîtier (6) sont disposées concentriquement par rapport au canal d'alimentation (41).

6. Capteur de pression et de température (1) selon la revendication 5, **caractérisé en ce que** le capteur de pression et de température (1) comprend un boîtier (8); le boîtier (8) s'étend radialement à l'extérieur de la partie inférieure de boîtier (6); le boîtier (8) comprend un troisième passage (83); et **en ce que** ledit troisième passage (83) s'étend depuis une extrémité du boîtier (6) faisant face au deuxième passage (43) jusqu'à une extrémité du boîtier (6) opposée du deuxième passage (43) .

7. Capteur de pression et de température (1) selon la revendication 6, **caractérisé en ce que** le deuxième passage (43) du raccord process (4) débouche sur le troisième passage (83) du boîtier (8); et **en ce que** les seconds conducteurs électriques (52, 52') sont disposés dans le troisième passage (83).

8. Capteur de pression et de température (1) selon la revendication 7, **caractérisé en ce que** les seconds conducteurs électriques (52, 52') sont fixés mécaniquement dans le deuxième passage (43) par une liaison de matière et/ou les seconds conducteurs électriques (52,52') sont fixés mécaniquement dans le troisième passage (83) par une liaison de matière.

9. Capteur de pression et de température (1) selon l'une quelconque des revendications 6 à 8, **caractérisé en ce que** le troisième passage (83) s'étend parallèlement à la direction axiale du capteur de pression et de température (1); et **en ce que** le troisième passage (83) est disposé décentré par rapport au centre du capteur de pression et de température (1).

10. Capteur de pression et de température (1) selon la revendication 1, **caractérisé en ce que** la carte de circuit électrique (7) comprend une pluralité de segments (71, 71'); la carte de circuit électrique (7) comprend au moins un espaceur (72); et **en ce que** lesdits segments (71, 71') sont espacés les uns des autres le long d'une direction axiale du capteur de pression et de température (1) par ledit espaceur (72).

11. Capteur de pression et de température (1) selon la revendication 10, **caractérisé en ce que** la carte de circuit électrique (7) est adaptée pour réaliser une pluralité de fonctions de mesure et d'amplification.

12. Capteur de pression et de température (1) selon l'une quelconque des revendications 1 ou 11, **caractérisé en ce que** le capteur de pression et de température (1) comprend exactement deux conducteurs de signal de sortie (11, 11'), un conducteur de terre électrique (12) et un conducteur d'alimentation électrique (13); un premier conducteur de signal de sortie (11) transmet les changements de tension électrique mesurés et amplifiés du module de capteur de pression (2) en tant que signaux de sortie; un second conducteur de signal de sortie (11') transmet les changements de résistance électrique mesurés et amplifiés de la sonde de température (5) en tant que signaux de sortie; le conducteur de terre électrique (12) fournit un potentiel de terre électrique commun au module de capteur de pression (2), à la sonde de température (5) et à la carte de circuit électrique (7); et **en ce que** le conducteur d'alimentation électrique (12) transmet une tension continue électrique à la carte de circuit électrique (7).
